# EUROPEAN PATENT APPLICATION

(11) **EP 3 796 527 A1**
(43) Date of publication of application: **24.03.2021**
(21) Application number: 19802688.2
(22) Date of filing: 13.05.2019
(51) Int. Cl.: H02K 53/00

(54) **MAGNETIC AC MOTOR HAVING A ROTOR WITH PERMANENT MAGNETS AND MOTOR ASSEMBLY**

(30) Priority: 15.05.2018 ES 201830467
(71) Applicant: Urbano Mesa, Cristóbal, 14550 Montilla-Córdoba (ES)
(72) Inventor: Urbano Mesa, Cristóbal, 14550 Montilla-Córdoba (ES)
(74) Representative: Tribalyte Ideas
(86) International application number: PCT/ES2019/070314
(87) International publication number: WO 2019/219993

(57) **Abstract**

The invention relates to a magnetic reciprocating engine having a rotor with permanent magnets (2) and (7), which uses the forces of attraction and repulsion occurring between the rotor magnets (2) and the stator magnets (7) to make a crankshaft (5) rotate, and applies the movement of the latter to any type of machine or vehicle that requires mechanical energy.

## Description

### FIELD OF THE ART

The field of the art to which the invention belongs is clean energies applied to all machines requiring an engine for operating, such as the transportation field, industry, or the tool manufacturing field.

### BACKGROUND OF THE INVENTION

With respect to the practical application of the invention, there are a number of motors with a magnetic operating principle which are formed by a rotor and a stator, with the rotor being what moves due to the forces of repulsion occurring between the magnetic fields generated in the stator and the rotor.

Most of these motors have electromagnets configured for generating the magnetic fields needed for generating the forces of repulsion and attraction which, therefore, have power consumption.

Although motors with permanent magnets have been tested, they have not been efficient enough due to the problems arising because of induced eddy currents, Foucault's currents, and problems with interaction between the magnets of the engine.

Patent document DE 102016007879 A1 discloses an engine with magnets with a crankshaft moved by several pistons, with each piston comprising a magnet. These magnets of each piston are moved as a result of the forces exerted on them by another series of magnets. However, the engine is highly complex and the use of the forces generated with it is, in practice, very limited (for the reasons set forth above).

### DESCRIPTION OF THE INVENTION

The engine of the present invention tries to solve all the problems previously found and thereby give rise to a clean, efficient, and cost-effective engine.

According to the general principle of attraction and repulsion of permanent magnets, when two magnets are brought together by the same poles, they repel one another, whereas if they are brought together by opposite poles, they will be attracted to one another with the same force by which they previously repelled one another. Likewise, upon trying to separate these same magnets when they are attached by their opposite poles by means of rotating one of them about its axis, it could be done using a force that would be equal to the force that attracts them, with the particularity that when they have been rotated 180°, the magnets will be in the repulsion position, causing the magnets to separate from one another. Upon continuing with the remaining 180° of rotation, this time no effort will be necessary since the magnets will be far enough apart for their magnetic fields not to interfere with one another and they will again be placed in the initial attraction position, thereby completing a very interesting natural cycle referred to as magnetic cycle.

The invention uses this magnetic cycle for driving an engine which uses the positive balance of forces occurring in said cycle, given that the difference in forces which exists between the force necessary for rotation of one of the magnets and the two forces (of repulsion in the downward stroke of the piston and of attraction in the upward stroke) is positive.

According to these principles, they could be applied to different types of motors the primary novelty of which would be the use of the positive balance of the generated forces.

More specifically, the invention preferably relates to a magnetic reciprocating engine having a rotor according to the claims herein. More specifically, said engine is formed by
- an engine block,
- a crankshaft,
- a plurality of cylinders and a plurality of connecting rods;
- several pistons formed by permanent rotor magnets, with each piston being attached to the crankshaft by its respective connecting rod, such that when the piston performs and up and down movement inside its respective cylinder, the connecting rod makes the crankshaft rotate;
- a plurality of shafts, each one placed on the same axis of revolution of each cylinder;
- a stator comprising a plurality of cavities, with several stator permanent magnets being housed in the cavities, secured at one end to one of the shafts, the rotation of the stator magnets about the axis thereof thereby being allowed, with each stator permanent magnet having a magnetic axis contained in a plane perpendicular to the corresponding shaft;
- a main shaft holding a plurality of bevel gears, with each bevel gear being configured for transmitting movement of the main shaft to each of the shafts;
- a belt and gearwheel transmission, arranged between the crankshaft and the main shaft configured for transmitting movement from the crankshaft to the main shaft;
and where all the materials forming the same, except the rotor magnets and stator magnets, are manufactured with non-metallic material.

This engine successfully takes the permanent magnets through a magnetic cycle: when the rotor magnet is at its highest point, close to its respective stator magnet, the facing magnetic poles will be of the same type and a force of repulsion will occur, causing the piston to be lowered. Once the rotor magnet reaches its lowest point, therefore far from the stator magnet, the main shaft rotates, causing the rotation of the stator magnet, which changes it magnetic orientation and will cause a force of attraction between both magnets to occur, thereby causing the upward movement of the piston and completing the cycle. Furthermore, the fact that each stator permanent magnet has its magnetic axis contained in a plane perpendicular to the corresponding shaft allows for a simple rotation with a minimum number of parts, since the transmission between the main shaft and the shaft moving each stator magnet is performed with a pair of bevel gears.

In particular embodiments of the invention, the rotor magnets, the stator magnets, and the cylinders are distributed according to an in-line or circular arrangement.

The present invention is compatible with a number of configurations, including an in-line or circular distribution, where said distribution may be adapted to the particular needs of each engine.

In particular embodiments, the magnetic reciprocating engine having a rotor may have any number of pistons.

It is also compatible with any number of pistons, since the crankshaft accepts the number of pistons needed to achieve the particular characteristics required by each engine.

In particular embodiments, the magnetic engine further comprises a case provided with lubricant which will be splashed around upon contacting the crankshaft.

Although there is not as much friction as in a reciprocating combustion engine, the possible friction between the piston and the interior of the cylinder can be alleviated by means of this lubrication system.

In particular embodiments, the engine block comprises openings and conduits which allows the variation in pressure generated by the movement of the rotor magnet to be balanced out.

Although this variation in pressure is not as high as in a reciprocating combustion engine, in these embodiments any type of damage due to excess pressure or due to the continued use of the engine is prevented.

### BRIEF DESCRIPTION OF THE DRAWINGS

To complement the description that is being made and for the purpose of helping to better understand the features of the invention, a set of figures is attached as an integral part of said description, in which the following is depicted in an illustrative and nonlimiting manner:
Figure 1 shows a front view of the engine with a linear distribution of cylinders.
Figure 2 shows a front view of the engine with a circular distribution of cylinders.

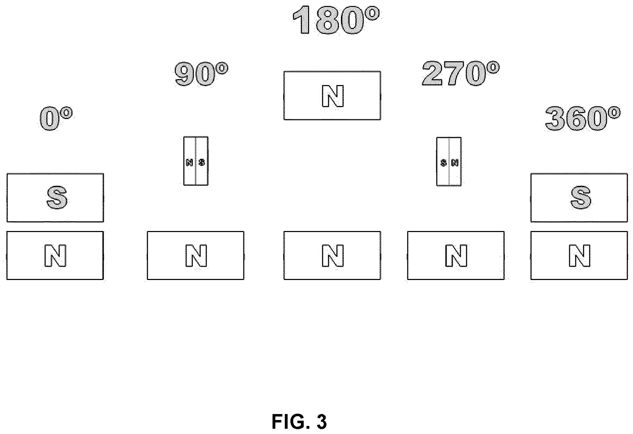

Figure 3 shows an illustration of the development of the magnetic cycle.

### PREFERRED EMBODIMENT OF THE INVENTION

As can be observed in the figures, the invention consists of a reciprocating engine having a rotor, similar to an internal combustion ignition engine. The invention consists of a rotor (1) formed by several permanent magnets (2) housed in their corresponding cylinders (3) by way of a piston. The magnets must remain inside the cylinder such that displacement thereof is allowed with complete freedom but without excessive clearances. It is not necessary that they are as tightly fitted as the pistons of an ignition engine since compression therein does not have to be performed. In order to prevent any type of excessive pressure in the cylinders (3), the engine block (1') will be provided with openings and conduits which allow said pressures generated by the movement of the magnet (2) to be balanced out.

The engine block (1') will be manufactured in a non-conductive material, preferably of a plastic origin, for the purpose of preventing the eddy currents that are induced when the displacement of a magnet in a conductive material takes place. The separation between the cylinders (3) of the engine block (1') must likewise be the separation needed for the rotor magnets (2) not to interfere with one another.

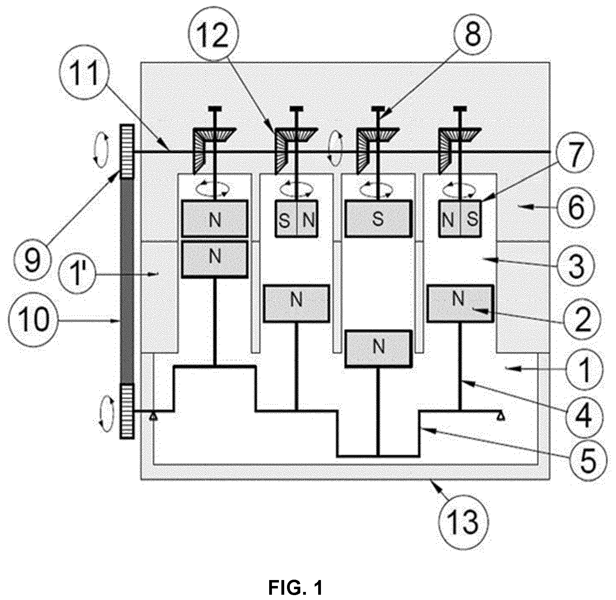

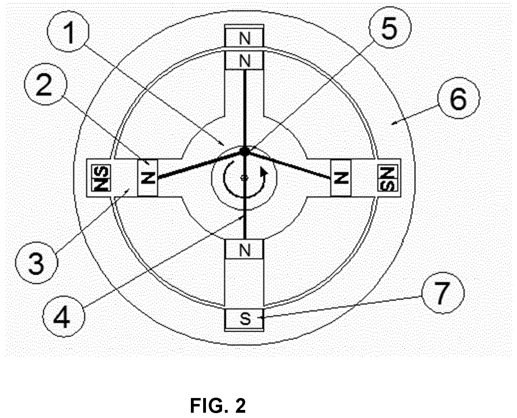

The distribution of the cylinders (3) of the engine block (1') can be linear, as observed in Figure 1, or circular, as observed in Figure 2, such as a V engine, but distributed along the entire circumference.

To minimize friction between the rotor magnets (2) and the cylinders (3), the engine will have a case (13) provided with lubricant which will be splashed around upon contacting the crankshaft (5).

Each of these magnets (2) is connected to a connecting rod (4) and the latter is in turn coupled to a crankshaft (5). The crankshaft (5) must have as many bends as the engine has cylinders (3). The throws of the crankshaft (5) must be equiangular, i.e., if the engine has four cylinders (3), the throws of the crankshaft (5) must be displaced 90° from one another. In the event that the engine has 3 cylinders (3), the displacement angle will be 120° and so on and so forth with any number of cylinders (3) to be arranged.

In the event that the distribution is circular, all the connecting rods (4) will be connected to a single throw of the crankshaft (5), as observed in Figure 2.

Moreover, the stator (6) of the engine is made up of permanent magnets (7) of the same type as the magnets housed in the cylinders (3). The stator magnets (7) will be secured by a shaft (8) placed on the axis of revolution of the cylinder (3) and it will allow the rotation of the stator magnets (7) about the axis thereof.

Both the rotor magnets (2) and the stator magnets (7) must have a sufficient lateral separation so that their magnetic fields do not interfere with one another.

The operation of the engine will take place due to the forces of attraction and repulsion occurring between the rotor magnets (2) and stator magnets (7), such that when the rotor magnet (2) is located at its highest point, the facing magnetic poles will be of the same type and a force of repulsion will occur, causing the lowering movement of the piston. Once the rotor magnet (2) reaches its lowest point, through a system of gears, the stator magnet (7) will rotate and change polarity, a force of attraction thereby occurring between both rotor magnets (2) and stator magnets (7), the upward movement of the piston thereby taking place and the cycle being completed.

It should be specified that the poles of the rotor magnets (2) and stator magnets (7) will be placed in a horizontal plane, both in the rotor (1) and in the stator (6), as shown in Figure 1.

Likewise, it should also be shown that when the rotor magnet (2) is located at its lowest point, the rotation of the stator magnet (7) takes place without any resistance whatsoever.

Synchronization between the rotation of the stator magnets (7) and the reciprocating movement of the rotor magnets (2) is performed through a gearwheel (9) and belt (10) transmission placed between the crankshaft (5) and the main shaft (11) holding the system of bevel gears (12). The bevel gears (12) act on each shaft (8) to cause the rotation of the stator magnets (7).

The preferred embodiment of the engine will be with the 4 cylinders placed in-line in the engine block (1'), separated from one another by a sufficient distance so that they do not interfere with one another.

The rotor magnets (2) and stator magnets (7) used must have the same shape of a rectangular prism. The cross-section of the "cylinders" (3) must have the same shape as the rotor magnets (2) in order to prevent the latter from rotating about their own axis, allowing only longitudinal displacement.

All the elements making up the engine except for those pertaining to the rotor permanent magnets (2) and stator permanent magnets (7) must be manufactured from an electrically non-conductive material, preferably from a plastic material with good mechanical strength and a low friction coefficient.

## Claims

1. A magnetic reciprocating engine having a rotor formed by:
- an engine block (1'),
- a crankshaft (5),
- a plurality of cylinders (3) and a plurality of connecting rods (4);
- several pistons formed by rotor permanent magnets (2), with each piston being attached to the crankshaft (5) by its respective connecting rod (4), such that when the piston performs and up and down movement inside its respective cylinder (3), the connecting rod (4) makes the crankshaft (5) rotate;
- a plurality of shafts (8), each one placed on the same axis of revolution of each cylinder (3)
- a stator (6) comprising a plurality of cavities, with several stator permanent magnets (7) being housed in the cavities, secured at one end to one of the shafts (8), the rotation of the stator magnets (7) about the axis thereof thereby being allowed, with each stator permanent magnet (7) having a magnetic axis contained in a plane perpendicular to the corresponding shaft (8);
- a main shaft (11) holding a plurality of bevel gears (12), with each bevel gear (12) being configured for transmitting movement of the main shaft (11) to each of the shafts (8);
- a belt (10) and gearwheel (9) transmission arranged between the crankshaft (5) and the main shaft (11) configured for transmitting movement from the crankshaft (5) to the main shaft (11)
and wherein all the materials forming the same, except the rotor magnets (2) and stator magnets (7), are manufactured with non-metallic material.

2. The magnetic reciprocating engine having a rotor according to claim 1, wherein all the rotor magnets (2) and all the stator magnets (7) forming same are permanent magnets.

3. The magnetic reciprocating engine having a rotor according to any of the preceding claims, wherein the rotor permanent magnets (2) and stator permanent magnets (7) are placed with the polarity in a horizontal plane.

4. The magnetic reciprocating engine having a rotor according to any of the preceding claims, wherein the cylinders (3) will have a section such that it prevents the rotation of the rotor magnets (2) about their own axis, with the cylinders particularly being of a rectangular section.

5. The magnetic reciprocating engine having a rotor according to any of the preceding claims, wherein the rotor magnets (2), the stator magnets (7), and the cylinders (3) are distributed according to an in-line or circular arrangement.

6. The magnetic reciprocating engine having a rotor according to any of the preceding claims, provided for its application in automotion, for supplying electricity, for charging batteries, with the shaft of the rotor (1) being connected to an alternator by means of its corresponding transmission.

7. The magnetic reciprocating engine having a rotor according to any of the preceding claims, wherein part of the cylinders are arranged in-line and another part of the cylinders are arranged in a circular distribution.

8. The magnetic engine according to any of the preceding claims, further comprising a case (13) provided with lubricant intended for being splashed around upon contacting the crankshaft (5).

9. The magnetic engine according to any of the preceding claims, wherein the engine block (1') comprises openings and conduits which allows the variation in pressure generated by the movement of the rotor magnet (2) to be balanced out.

10. A magnetic reciprocating engine assembly having a rotor comprising several magnetic engine modules according to any of the preceding claims.
